# EUROPÄISCHE PATENTSCHRIFT

(11) **EP 3 254 992 B1**
(45) Veröffentlichungstag und Bekanntmachung des Hinweises auf die Patenterteilung: **02.08.2023**
(21) Anmeldenummer: 16173993.3
(22) Anmeldetag: 10.06.2016
(51) Int. Cl.: B65G 21/20

(54) **TRANSPORTVORRICHTUNG FÜR DEN HÄNGENDEN TRANSPORT VON TRANSPORTGÜTERN MITTELS UNTERDRUCK**
TRANSPORT DEVICE FOR SUSPENDED TRANSPORT OF GOODS USING VACUUM MEANS
DISPOSITIF DE TRANSPORT POUR LE TRANSPORT SUSPENDU DE MARCHANDISES A TRANSPORTER AU MOYEN DE DEPRESSION

(43) Veröffentlichungstag der Anmeldung: 13.12.2017
(73) Patentinhaber: Heinrich Georg GmbH Maschinenfabrik, 57223 Kreuztal (DE)
(72) Erfinder: FOLKE, Thomas, 57250 Netphen (DE)
(74) Vertreter: advotec.

(56) Entgegenhaltungen:
- EP-A2- 0 827 918
- EP-A2- 0 827 920
- DE-A1-102005 050 687
- DE-U1- 29 721 889
- US-A- 3 799 541
- US-A- 5 475 917
- US-A- 6 102 191

## Beschreibung

Die vorliegende Erfindung betrifft eine Transportvorrichtung nach dem Oberbegriff des Anspruchs 1.

Aus der EP 0 904 242 B1 ist eine Vorrichtung der eingangs genannten Art bekannt, bei der die Kontaktseite des Transportriemens mit einer Mehrzahl in Längsrichtung des Transportriemens angeordneten ringförmigen Erhebungen versehen ist, welche die im Transportriemen ausgebildeten Saugöffnungen umgeben. Durch die ringförmigen Erhebungen werden zwischen der Kontaktseite des Transportriemens und einer Kontaktseite des Transportgutes einzelne Haltekammern ausgebildet, die eine Unterdruckbeaufschlagung des Transportgutes ermöglichen.

Bei der bekannten Vorrichtung ist der Energieaufwand zum Halten insbesondere schwerer Bleche mittels Unterdruck erheblich, da die durch die ringförmigen Erhebungen begrenzte Flächen, an der der Unterdruck an der Kontaktseite des Transportgutes tatsächlich wirksam ist, vergleichsweise klein sind, so dass für einen sicheren Transport ein vergleichsweise großer Druckgradient erforderlich ist.

Darüber hinaus ergibt sich aufgrund des vergleichsweise großen Druckgradienten eine hohe Flächenpressung zwischen den ringförmigen Erhebungen und der Kontaktseite des Transportgutes. Dies führt insbesondere bei gefetteten oder geölten Oberflächen des Transportguts zu einer unerwünschten Oberflächensignatur auf der Kontaktseite.

Die EP 0 827 918 A2 offenbart eine Transportvorrichtung für den hängenden Transport von Transportgütern nach dem Oberbegriff des Anspruchs 1.

Aufgabe der Erfindung ist es, eine Vorrichtung der eingangs genannten Art so auszubilden, dass ein sicherer Transport von zu transportierenden Bauteilen mittels Unterdruck auch mit einem vergleichsweise geringen Druckgradienten möglich ist.

Zur Lösung dieser Aufgabe weist die Vorrichtung die Merkmale des Anspruchs 1 auf.

Bei der erfindungsgemäßen Vorrichtung ist auf der Kontaktseite des Transportriemens eine durch Längsränder des Transportriemens begrenzte und sich in Längsrichtung des Transportriemens erstreckende Ausnehmung ausgebildet, derart, dass zwischen der Kontaktseite des Transportriemens und der Kontaktseite des Transportgutes ein durch die Längsränder quer zur Längsrichtung des Transportriemens gegenüber der Kontaktseite des Transportguts abgedichteter Saugkanal ausgebildet ist. Die erfindungsgemäße Vorrichtung ermöglicht eine erhebliche Vergrößerung der am Transportgut wirksamen Haltefläche dadurch, dass auf die Ausbildung vereinzelter, diskreter Haltekammern, die voneinander unabhängig ausgebildete Erhebungen in der Kontaktseite des Transportriemens aufweisen, verzichtet werden kann, und stattdessen ein in Längsrichtung des Transportriemens zwischen der Kontaktseite des Transportriemens und der Kontaktseite des Transportgutes durchgängig ausgebildeter Saugkanal ausgebildet wird, der in seiner maximalen Länge lediglich durch die Länge des Transportriemens begrenzt ist.

Erfindungsgemäß ist in der Kammeröffnung der Unterdruckkammer eine sich in Längsrichtung des Transportriemens erstreckende Rückenstütze zur Abstützung der Rückseite des Transportriemens angeordnet. Die Rückenstütze ermöglicht die Einstellung einer definierten Höhe des zwischen der Kontaktseite des Transportriemens und der Kontaktseite des Transportgutes ausgebildeten Saugkanals.

Erfindungsgemäß ist die Rückenstütze in ihrer Anordnung in der Kammeröffnung zur Einstellung der Tiefe der Ausnehmung des Tragriemens veränderbar, so dass bei Bedarf eine Anpassung der Höhe des Saugkanals zur Einstellung eines gewünschten Kanalprofils möglich ist.

Vorzugsweise ist die Ausnehmung zumindest geringfügig länger als die Länge der Kontaktseite des Transportguts ausgebildet, so dass an den axialen Enden des Saugkanals Zuluftöffnungen ausgebildet sind, die aufgrund ihres im Vergleich zur Fläche der Ausnehmung kleinen Öffnungsquerschnitts die Erzeugung eines ausreichenden Druckgradienten im Saugkanal jedoch nicht infrage stellen.

Insbesondere ist hervorzuheben, dass die erfindungsgemäße Transportvorrichtung die Ausbildung des Saugkanals als eine integral im Transportriemen ausgebildete Ausnehmung ermöglicht, so dass der Saugkanal auf Basis eines standartmäßig ausgeführten Transportriemens ausgebildet werden kann.

Die zur Ausbildung des Saugkanals benötigte Ausnehmung kann in ihrer einfachsten Ausführung durch eine infolge der auf die Rückseite des Transportriemens wirkenden Saugkraft ausgebildete Profilierung des Riemenquerschnitts gebildet sein, derart, dass sich der Transportriemen unter dem Einfluss der Saugkraft aufwölbt und sich auf der Kontaktseite des Transportriemens infolge des Aufwölbens eine Kavität ausbildet. Ebenso kann die Ausnehmung durch einen geeigneten Materialabtrag in der Kontaktseite des Transportriemens erzeugt werden. Dies kann vorzugsweise durch eine abrasive Bearbeitung der Riemenoberfläche und Erzeugung einer entsprechend in der Riemenoberfläche ausgebildeten Nut erreicht werden.

Besonders bevorzugt ist es, wenn die Ausnehmung in der Kontaktseite des Transportriemens als nutförmige Materialausnehmung ausgebildet ist und sich über die gesamte Riemenlänge erstreckt, so dass entsprechend die gesamte Riemenoberfläche zur Ausbildung von jeweils zwischen den Kontaktseiten der Transportgüter und der Kontaktseite des Transportriemens ausgebildeten Saugkanälen zur Verfügung steht, wobei die jeweilige Länge der Saugkanäle allein durch die Länge der Kontaktseiten der Transportgüter bestimmt ist.

Wenn gemäß einer bevorzugten Ausführungsform die Kammeröffnung benachbart den Längsrändern des Transportriemens jeweils durch eine sich in Längsrichtung des Transportriemens erstreckende Riemenstütze begrenzt ist, die zur Anlage gegen die Rückseite des Transportriemens dient, dient der Transportriemen nicht nur zur Ausbildung des Saugkanals sondern auch zur Ausbildung der Unterdruckkammer, deren Druck unmittelbar auf die Rückseite des Transportriemens wirkt.

Besonders vorteilhaft ist es, wenn die Rückseite des Transportriemens in einem als Traktionsbereich ausgebildeten mittleren Bereich mit einer insbesondere als Verzahnung ausgebildeten Traktionseinrichtung versehen ist, wobei die Rückseite im Bereich der den Riemenstützen gegenüberliegenden Längsränder des Transportriemens eine ebene Dichtfläche aufweist, so dass mittels der durch die Riemenstützen und die Stützränder des Transportriemens gebildete Dichtpaarung eine wirksame Abdichtung der Unterdruckkammer ermöglicht ist.

Zur Verstärkung der durch den Unterdruck erzeugten Haltekräfte kann die Rückenstütze mit einer Magneteinrichtung versehen sein. Vorzugsweise kann die Magneteinrichtung als Bestandteil der Rückenstütze ausgebildet sein.

In einer bevorzugten Ausführungsform ist gegenüberliegend den Riemenstützen jeweils eine sich zumindest abschnittsweise in Längsrichtung des Transportriemens erstreckende, insbesondere als Halteleiste ausgebildete Rückhalteeinrichtung vorgesehen, derart, dass die Längsränder des Transportriemens in zwischen den Riemenstützen und den Rückhalteeinrichtung ausgebildeten Führungsnuten aufgenommen sind.

Hierdurch wird sichergestellt, dass bei einem Abwurf des Transportgutes von dem Transportriemen infolge einer Druckerhöhung in der Unterdruckkammer ein Abheben des Transportriemens von den Riemenstützen verhindert wird.

Wenn bei einer weiteren Ausführungsform die Unterdruckkammer mit einer an einen Unterdruckerzeuger angeschlossenen Unterdruckleitung zur Beaufschlagung der Unterdruckkammer mit Unterdruck versehen ist, wobei in der Unterdruckleitung eine über ein Schaltventil mit einer Druckluftkammer oder einem Drucklufterzeuger verbundene Strahlpumpe angeordnet ist, derart, dass bei Betätigung des Schaltventils ausgelöst durch die Strahlpumpe über die Unterdruckleitung eine Druckbeaufschlagung der Unterdruckkammer mit Überdruck erfolgt, kann das in der Unterdruckleitung vorhandene Volumen zur Beaufschlagung der Unterdruckkammer mit Überdruck genutzt werden, so dass lediglich ein kurzer durch die Strahlpumpe in die Unterdruckleitung eingeleiteter Druckimpuls ausreichend ist. Der zur Erzeugung des Überdrucks erforderliche Energieaufwand für den Abwurf des Transportguts ist daher entsprechend gering.

Nachfolgend wird eine bevorzugte Ausführungsform der Erfindung anhand der Zeichnung näher erläutert.

Es zeigen:
- **Fig. 1**: eine Transportvorrichtung mit einer Mehrzahl von Bandfördersträngen;
- **Fig. 2**: eine Bandförderstrang mit zwei Bandfördereinrichtungen in isometrischer Darstellung;
- **Fig. 3**: den in **Fig. 2** dargestellten Bandförderstrang in einer Querschnittsdarstellung;
- **Fig. 4**: eine vergrößerte Darstellung einer in einer Bandfördereinrichtung ausgebildeten Unterdruckkammer;
- **Fig. 5**: ein Druckanschlussbereich der Unterdruckkammer in einem pneumatischen Schaltbild.

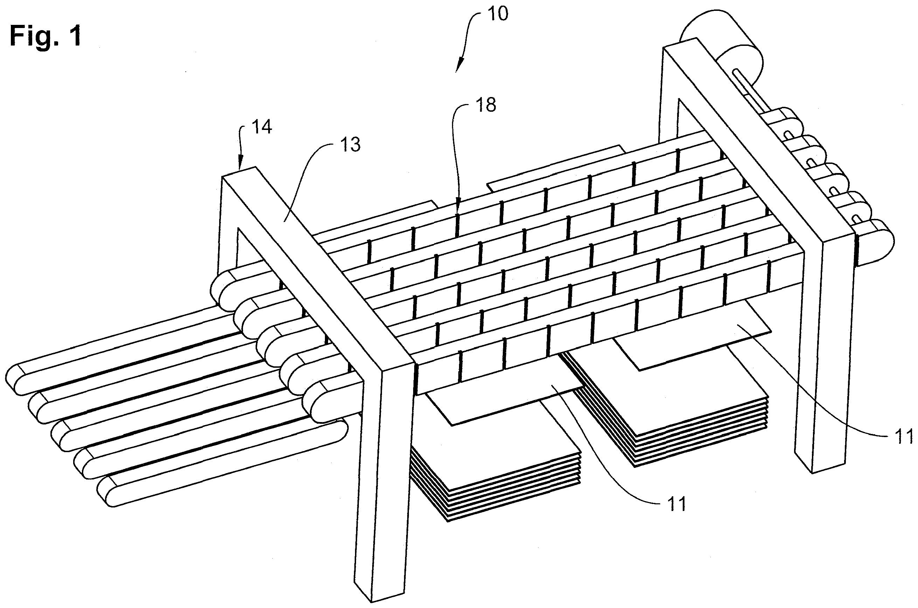

**Fig. 1** zeigt in einer schematischen Darstellung eine Transportvorrichtung 10 zum hängenden Transport von Transportgütern, die im vorliegenden Fall als Blechplatinen 11 ausgeführt sind. Die Transportvorrichtung 10 umfasst eine Mehrzahl von parallel zueinander angeordneten Bandfördersträngen 18, die jeweils an Traversen 13 eines als Portalgestell 14 ausgebildeten Trägergestells angeordnet sind und ausgehend von einem Aufnahmeende der Transportvorrichtung einen horizontalen Transport der Blechplatinen 11 bis zu einer am Ende der Transportvorrichtung vorgesehene Abwurfposition ermöglichen, in der die Blechplatinen 11 von den Bandfördersträngen 18 abgeworfen werden.

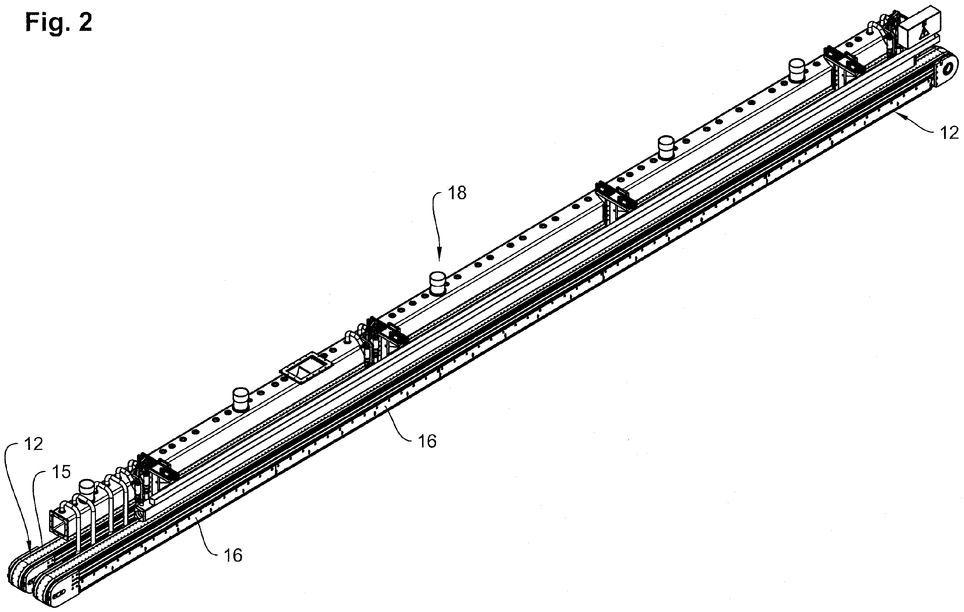

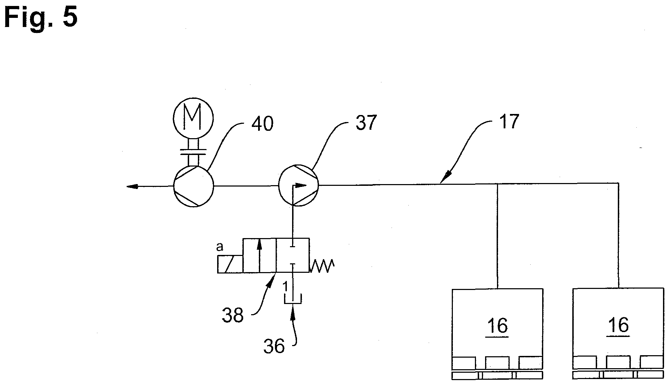

Wie insbesondere aus **Fig. 2** ersichtlich, weisen die Bandförderstränge 18 im Fall des dargestellten Ausführungsbeispiels jeweils zwei parallel zueinander angeordnete Bandfördereinrichtungen 12 auf. Zum Transport der Blechplatinen 11 werden die Blechplatinen 11 mittels Unterdruck an den umlaufend an den Bandfördereinrichtungen 12 angeordneten Transportriemen 15 gehalten. Hierzu weisen die Bandfördereinrichtungen 12 über die Länge der Bandfördereinrichtung 12 in einer Reihenanordnung angeordnete Unterdruckkammern 16 auf, an die zur Erzeugung des Unterdrucks abschnittsweise Unterdruckleitungen 17 angeschlossen sind, die mit einem vorzugsweise als Radialventilator ausgebildeten Unterdruckerzeuger 40 (**Fig. 5**) verbunden sind.

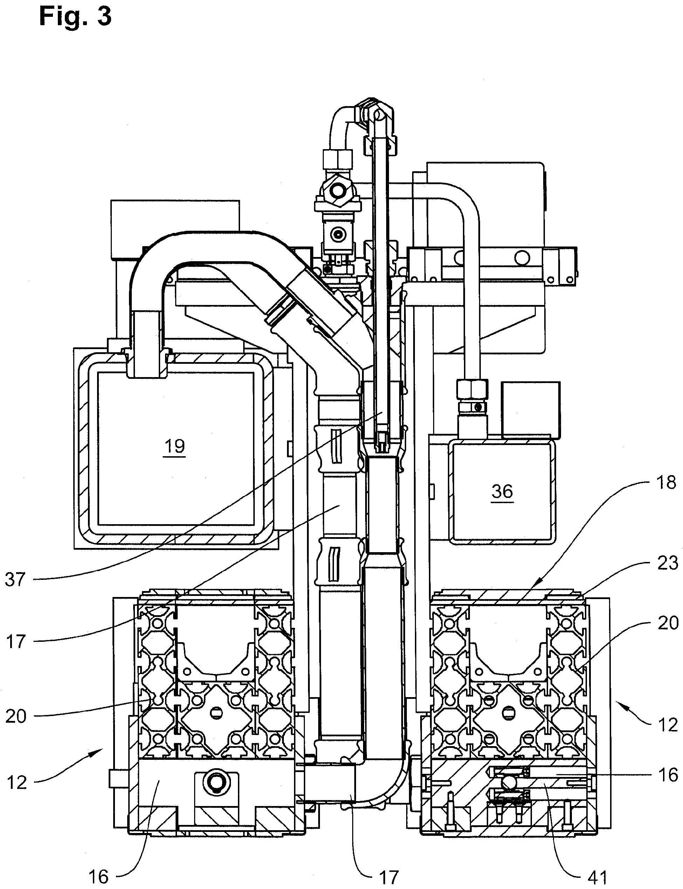

Wie aus der Darstellung in **Fig. 3** deutlich wird, sind im vorliegenden Fall jeweils zwei Bandfördereinrichtungen 12 zu dem Bandförderstrang 18 zusammengefasst, wobei die Unterdruckkammern 16 der Bandfördereinrichtungen 12 über eine an die Unterdruckleitungen 17 angeschlossene Vakuumkammer 19 mit dem hier nicht näher dargestellten Unterdruckerzeuger verbunden sind.

Die Bandfördereinrichtungen 12 weisen jeweils ein horizontal verlaufendes Trägerprofil 20 auf, an dessen Unterseite jeweils die Unterdruckkammer 16 ausgebildet ist.

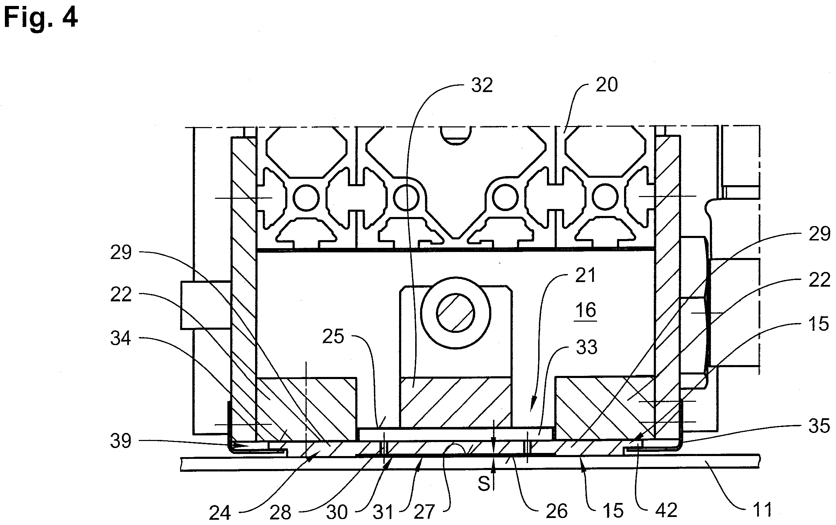

Wie insbesondere auch **Fig. 4** zeigt, weisen die Unterdruckkammern 16 eine Kammeröffnung 21 auf, die seitlich durch parallel zum Trägerprofil 20 verlaufende Riemenstützen 22 begrenzt wird. Auf einer Oberseite (**Fig. 3**) des Trägerprofils 20 ist eine Riemenführung 23 vorgesehen, so dass, wie insbesondere aus einer Zusammenschau der **Fig. 2** und **3** deutlich wird, der Transportriemen 15 über an den Enden des Trägerprofils 20 angeordnete Umlenkrollen und längs den Riemenstützen 22 auf der Unterseite des Trägerprofils 20 sowie der Riemenführung 23 auf der Oberseite des Trägerprofils 20 geführt wird.

Wie **Fig. 4** zeigt, ist der Transportriemen 15 mit einem unteren Riementrum 24 zwischen der Unterdruckkammer 16 und einer Blechplatine 11 angeordnet und bildet mit einer Rückseite 25 eine Kammerwand der Unterdruckkammer 16 aus, so dass eine Fluidverbindung zwischen der Unterdruckkammer 16 und einer Kontaktseite 26 des Transportriemens 15, mit der der Transportriemen 15 an einer Kontaktseite 27 der Blechplatine 11 anliegt, ausschließlich über im Transportriemen 15 ausgebildete Saugöffnungen 28 erfolgt.

In der Kontaktseite 26 des Transportriemens 15 ist eine seitlich durch Längsränder 29 des Transportriemens 15 begrenzte und sich in Längsrichtung des Transportriemens 15 erstreckende Ausnehmung 30 ausgebildet, derart, dass zwischen der Kontaktseite 26 des Transportriemens 15 und der Kontaktseite 27 der Blechplatine 11 ein durch die Blechplatine 11 abgedeckter Saugkanal 31 ausgebildet ist.

Wie **Fig. 4** zeigt, ist durch die in der Kontaktseite 26 des Transportriemens 15 ausgebildete Ausnehmung 30 im Bereich des Saugkanals 31 ein Spalt S entsprechend der Tiefe der Ausnehmung 30 zwischen der Kontaktseite 26 des Transportriemens 15 und der Kontaktseite 27 der Blechplatine 27 ausgebildet, der sicherstellt, dass die Saugöffnungen 28 im Transportriemen 15 infolge der auf die Kontaktseite 27 des Transportgutes wirkenden Saugkräfte nicht abgedeckt werden und somit sich infolge des Unterdrucks die zum Halten der Blechplatine 11 notwendigen Haltekräfte ausbilden können. Zur Beeinflussung des Spaltes S ist im Bereich der Kammeröffnung 21 eine sich zumindest abschnittsweise in Längsrichtung des Transportriemens 15 erstreckende Rückenstütze 32 vorgesehen, die gegen die Rückseite 25 des Transportriemens 15 anliegt. Wie insbesondere Fig. 3 zeigt, ist die Rückenstütze 32 mit einer etwa als Exzentereinrichtung ausgebildeten Stelleinrichtung 41 versehen, die eine vertikale Zustellung der Rückenstütze 32 in Richtung auf den Transportriemen 15 ermöglicht.

Abweichend von der Darstellung in **Fig. 4** kann die Rückenstütze 32 zur Verstärkung der durch Unterdruck erzeugten Haltekräfte zusätzlich mit einer nicht näher dargestellten Magneteinrichtung versehen sein.

Der Transportriemen 15 ist, wie insbesondere aus **Fig. 4** ersichtlich, auf seiner Rückseite 25 lediglich in einen mittleren Bereich, der zwischen den Längsrändern 29 des Transportriemens 15 ausgebildet ist, mit einer hier als Verzahnung ausgebildeten Traktionseinrichtung 33 versehen, die eine Übertragung einer Vortriebskraft auf den Transportriemen 15 ermöglicht. Im Bereich der Längsränder 29 weist die Rückseite 25 ebene Dichtflächen 34 auf, die infolge des auf die Rückseite 25 wirkenden Unterdrucks abdichtend an den Riemenstützen 22 anliegen.

Gegenüberliegend den Riemenstützen 22 ist jeweils eine hier als Halteleiste ausgebildete und sich zumindest abschnittsweise in Längsrichtung des Transportriemens 15 erstreckende Rückhalteeinrichtung 35 vorgesehen, so dass an den Längsrändern 29 ausgebildete Führungsstege 42 in Führungsnuten 39 aufgenommen sind, die zwischen den Riemenstützen 22 und den Rückhalteeinrichtungen 35 ausgebildet sind.

Die Rückhalteeinrichtungen 35 dienen insbesondere dazu, dass bei einer zur Unterstützung des Abwurfs der Blechplatinen 11 erfolgenden Druckbeaufschlagung der Unterdruckkammer 16 die Längsränder 29 nicht zu weit von den Riemenstützen 22 abheben, was den nachfolgenden erneuten Aufbau des Unterdrucks in der Druckkammer 16 verzögern würde. Für den Abwurf der Blechplatinen 11 von der Bandfördereinrichtung 12 ist, wie insbesondere in **Fig. 3** dargestellt, an dem Bandförderstrang 18 eine Druckluftkammer 36 vorgesehen, die über eine Strahlpumpe 37 an die Unterdruckleitung 17 angeschlossen ist.

Wie insbesondere die schematische Darstellung in **Fig. 5** zeigt, ist die in der Unterdruckleitung 17 angeordnete Strahlpumpe 37 über ein Schaltventil 38 mit der Druckluftkammer 36 verbunden, so dass bei Betätigung des Schaltventils 38 eine kurzzeitige Beaufschlagung der Strahlpumpe 37 mit Druckluft erfolgt und aufgrund des Ejektorprinzips das in der Unterdruckleitung 17 enthaltene Volumen zu einer Druckluftbeaufschlagung der Unterdruckkammer 16 zur Verfügung steht und ein entsprechender Druckimpuls auf die Rückseite 25 des Transportriemens 15 und somit durch die Saugöffnungen 28 im Transportriemen 15 auf die Blechplatine 11 zu deren Abwurf ausgeübt werden kann.

## Patentansprüche

1. Transportvorrichtung (10) für den hängenden Transport von insbesondere als Blechplatinen (11) ausgeführten Transportgütern mittels Unterdruck mit zumindest einer Bandfördereinrichtung (12) mit zumindest einem umlaufenden Transportriemen (15), der längs einer Unterdruckkammer (16) geführt ist, derart, dass eine der Unterdrucckammer (16) zugewandte Rückseite (25) des Transportriemens (15) gegenüberliegend einer Kammeröffnung (21) der Unterdruckkammer (16) angeordnet ist, und eine Kontaktseite (26) des Transportriemens (15) zur Ausbildung von Haltekräften zwischen der Kontaktseite (26) des Transportriemens (15) und einer Kontaktseite (27) des Transportguts mit zwischen der Rückseite (25) und der Kontaktseite (26) des Transportriemens (15) ausgebildeten Saugöffnungen (28) versehen ist, die mit einer auf der Kontaktseite (26) des Transportriemens (15) ausgebildeten Ausnehmung (30) in Wirkverbindung stehen, wobei die Ausnehmung (30) durch Längsränder (29) des Transportriemens (15) begrenzt ist und sich in Längsrichtung des Transportriemens (15) erstreckt, derart dass zwischen der Kontaktseite (26) des Transportriemens (15) und der Kontaktseite (27) des Transportguts ein durch die Längsränder (29) quer zur Längsrichtung des Transportriemens (15) gegenüber der Kontaktseite (27) des Transportguts abgedichteter Saugkanal (31) ausgebildet ist, wobei in der Kammeröffnung (21) eine sich in Längsrichtung des Transportriemens (15) erstreckende Rückenstütze (32) zur Abstützung der Rückseite (25) des Transportriemens (15) angeordnet ist,
**dadurch gekennzeichnet,**
**dass** die Rückenstütze (32) in ihrer Anordnung in der Kammeröffnung (21) zur Einstellung der Tiefe der Ausnehmung (30) veränderbar ist.

2. Vorrichtung nach Anspruch 1,
**dadurch gekennzeichnet,**
**dass** die Ausnehmung (30) auf der Kontaktseite (26) des Transportriemens (15) als nutförmige Materialausnehmung ausgebildet ist und sich über die gesamte Riemenlänge erstreckt.

3. Vorrichtung nach Anspruch 1 oder 2,
**dadurch gekennzeichnet,**
**dass** die Kammeröffnung (21) benachbart den Längsrändern (29) des Transportriemens (15) jeweils durch eine sich in Längsrichtung des Transportriemens (15) erstreckende Riemenstütze (22) begrenzt ist, die zur Anlage gegen die Rückseite (25) des Transportriemens (15) dient.

4. Vorrichtung nach Anspruch 3,
**dadurch gekennzeichnet,**
**dass** die Rückseite (25) des Transportriemens (15) in einem als Traktionsbereich ausgebildeten mittleren Bereich mit einer insbesondere als Verzahnung ausgebildeten Traktionseinrichtung (33) versehen ist, wobei die Rückseite (25) im Bereich der den Riemenstützen (22) gegenüberliegenden Längsränder (29) des Transportriemens (15) eine ebene Dichtfläche (34) aufweist.

5. Vorrichtung nach einem der vorangehenden Ansprüche,
**dadurch gekennzeichnet,**
**dass** die Rückenstütze (32) mit einer Magneteinrichtung versehen ist.

6. Vorrichtung nach einem der Ansprüche 3 bis 5,
**dadurch gekennzeichnet,**
**dass** gegenüberliegend den Riemenstützen (22) jeweils eine sich zumindest abschnittsweise in Längsrichtung des Transportriemens (15) erstreckende, insbesondere als Halteleiste ausgebildete Rückhalteeinrichtung (35) vorgesehen ist, derart, dass die Längsränder (29) des Transportriemens (15) in zwischen den Riemenstützen (22) und den Rückhalteeinrichtungen (35) ausgebildeten Führungsnuten (39) aufgenommen sind.

7. Vorrichtung nach einem oder mehreren der vorangehenden Ansprüche,
**dadurch gekennzeichnet,**
**dass** die Unterdruckkammer (16) mit einer an einen Unterdruckerzeuger (40) angeschlossenen Unterdruckleitung (17) zur Beaufschlagung der Unterdruckkammer (16) mit Unterdruck versehen ist, wobei in der Unterdruckleitung (17) eine über ein Schaltventil (38) mit einer Druckluftkammer (36) oder einem Drucklufterzeuger verbundene Strahlpumpe (37) angeordnet ist, derart, dass bei Betätigung des Schaltventils (38) ausgelöst durch die Strahlpumpe (37) über die Unterdruckleitung (17) eine Druckbeaufschlagung der Unterdruckkammer (16) mit Überdruck erfolgt.

## Claims

1. A conveyor device (10) for the suspended conveyance of conveyable goods realized in particular as tailored blanks (11) by means of negative pressure, the conveyor device (10) comprising at least one belt conveyor device (12) comprising at least one continuous conveyor belt (15), which is guided along a negative-pressure chamber (16) in such a manner that a rearward side (25) of the conveyor belt (15) facing towards the negative-pressure chamber (16) is arranged opposite a chamber opening (21) of the negative-pressure chamber (16) and that a contact side (26) of the conveyor belt (15) is provided with suction openings (28) formed between the rearward side (25) and the contact side (26) of the conveyor belt (15) in order to form holding forces between the contact side (26) of the conveyor belt (15) and a contact side (27) of the conveyable goods, which are operatively connected to a recess (30) formed on the contact side (26) of the conveyor belt (15), the recess (30) being limited by longitudinal edges (29) of the conveyor belt (15) and extending in the longitudinal direction of the conveyor belt (15) in such a manner that a suction duct (31) sealed by the longitudinal edges (29) and arranged transversely to the longitudinal direction of the conveyor belt (15) with respect to the contact side (27) of the conveyable goods is formed between the contact side (26) of the conveyor belt (15) and the contact side (27) of the conveyable goods, a rearward support (32) extending in the longitudinal direction of the conveyor belt (15) being arranged in the chamber opening (21) in order to support the rearward side (25) of the conveyor belt (15),
**characterized in that**
the arrangement of the rearward support (32) in the chamber opening (21) can be altered in order to adjust the depth of the recess (30).

2. The device according to claim 1,
**characterized in that**
the recess (30) is formed as a groove-shaped material recess on the contact side (26) of the conveyor belt (15) and extends across the entire length of the belt.

3. The device according to claim 1 or 2,
**characterized in that**
adjacent to the longitudinal edges (29) of the conveyor belt (15), the chamber opening (21) is limited in each instance by a belt support (22) extending in the longitudinal direction of the conveyor belt (15), said belt support (22) serving as an abutting surface against the rearward side (25) of the conveyor belt (15).

4. The device according to claim 3,
**characterized in that**
the rearward side (25) of the conveyor belt (15) is provided with a traction device (33), formed in particular as toothing, in a middle section formed as a traction area, said rearward side (25) comprising a level sealing surface (34) in the area of the longitudinal edges (29) of the conveyor belt (15) opposite the belt support (22).

5. The device according to any one of the preceding claims,
**characterized in that**
the rearward support (32) is provided with a magnet device.

6. The device according to any one of the claims 3 to 5,
**characterized in that**
a retaining device (35) extending in the longitudinal direction of the conveyor belt (15) at least in sections and formed in particular as a holding rail is provided opposite each of the belt supports (22) in such a manner that the longitudinal edges (29) of the conveyor belt (15) is received in guide grooves (39) formed between the belt support (22) and the retaining device (35).

7. The device according to one or more of the preceding claims,
**characterized in that**
the negative-pressure chamber (16) is provided with a negative-pressure conduit (17) connected to a negative-pressure generator (40) for pressurizing the negative-pressure chamber (16) with negative pressure, a jet pump (37) connected to a compressed-air chamber (36) or a compressed-air generator via a switching valve (38) being arranged in the negative-pressure conduit (17) in such a manner that the negative-pressure chamber (16) is pressurized with positive pressure via the negative-pressure conduit (17) as triggered by the jet pump when the switching valve is actuated.

## Revendications

1. Dispositif de transport (10) pour le transport suspendu de produits de transport réalisés notamment comme flans soudés (11) au moyen du vide, le dispositif de transport (10) comprenant au moins un dispositif (12) de transport de courroie comprenant au moins un courroie de transport (15) circonférentiel, qui est guidé le long d'une chambre de vide (16) de telle manière qu'un envers (25) de la courroie de transport (15) tournant vers la chambre de vide (16) est disposé vis-à-vis d'une ouverture (21) de la chambre de vide (16) et qu'un côté de contact (26) de la courroie de transport (15) est pourvu d'orifices d'aspiration (28) formées entre l'envers (25) et le côté de contact (26) de la courroie de transport (15) afin de former des forces de retenue entre le côté de contact (26) de la courroie de transport (15) et un côté de contact (27) de produits de transport, les orifices d'aspiration (28) étant reliés à un évidement (30) formé sur le côté de contact (26) de la courroie de transport (15) en liaison fonctionnelle, l'évidement (30) étant limité par des bords longitudinaux (29) de la courroie de transport (15) et s'étendant au sens longitudinal de la courroie de transport (15) de telle manière qu'un canal d'aspiration (31) étanché par des bords longitudinaux (29) transversalement au sens longitudinal de la courroie de transport (15) par rapport au côté de contact (27) de produits de transport est formé entre le côté de contact (26) de la courroie de transport (15) et le côté de contact (27) de produits de transport, un dossier (32) s'étendant au sens longitudinal de la courroie de transport (15) étant disposé dans l'ouverture de chambre (21) afin de supporter l'envers (25) de la courroie de transport (15),
**caractérisé en ce que**
la position du dossier (32) dans l'ouverture de chambre (21) peut être changée afin de ajuster la profondeur de l'évidement (30).

2. Dispositif selon la revendication 1,
**caractérisé en ce que**
l'évidement (30) est formé comme évidement de matériau en forme de rainure sur le côté de contact (26) de la courroie de transport (15) et s'étend à travers la longueur entière de la courroie.

3. Dispositif selon la revendication 1 ou la revendication 2,
**caractérisé en ce**
**qu'**adjacent aux bords longitudinaux (29) de la courroie de transport (15), l'ouverture de chambre (21) est limitée à chaque fois par un support de courroie (22) s'étendant au sens longitudinal de la courroie de transport (15), ledit support de courroie (22) servant comme surface d'appui contre l'envers (25) de la courroie de transport (15).

4. Dispositif selon la revendication 3,
**caractérisé en ce que**
l'envers (25) de la courroie de transport (15) est pourvu d'un dispositif de traction (33), formé notamment comme engrenage, dans une zone moyenne formée comme zone de traction, ledit envers (25) comprenant une surface d'étanchéité (34) plane dans la zone de bords longitudinaux (29) de la courroie de transport (15) opposée le support de courroie (22).

5. Dispositif selon l'une quelconque des revendications précédentes,
**caractérisé en ce que**
le dossier (32) est pourvu d'un dispositif d'aimant.

6. Dispositif selon l'une quelconque des revendications 3 à 5,
**caractérisé en ce**
**qu'**un dispositif de retenue (35) s'étendant au sens longitudinal de la courroie de transport (15) au moins en sections et formé notamment comme rail de retenue est prévu vis-à-vis de chaque support de courroie (22) de telle manière que les bords longitudinaux (29) de la courroie de transport (15) sont reçus dans des rainures de guidage (39) formées entre les supports de courroie (22) et les dispositifs de retenue (35).

7. Dispositif selon une ou plusieurs de revendications précédentes,
**caractérisé en ce que**
la chambre de vide (16) est pourvu d'un conduit de vide (17) relié à un générateur de vide (40) pour pressuriser la chambre de vide (16) avec du vide, une pompe de jet d'eau (37) reliée à une chambre d'air comprimé (36) ou un générateur d'air comprimé par une valve de passage (38) étant disposée dans un conduit de vide (17) de telle manière que la chambre de vide (16) est pressurisée avec surpression par le conduit de vide (17) déclenché par la pompe de jet d'eau quand la valve de passage est actionnée.
